**Europäisches Patentamt**

**European Patent Office**

**Office européen des brevets**

(19)

(11)  **EP 1 026 526 A1**

(12)  ## EUROPEAN PATENT APPLICATION

(43) Date of publication:
**09.08.2000 Bulletin 2000/32**

(51) Int Cl.$^{7}$: **G02B 6/12**, G02B 6/34

(21) Application number: **99400224.4**

(22) Date of filing: **02.02.1999**

(84) Designated Contracting States:
**AT BE CH CY DE DK ES FI FR GB GR IE IT LI LU MC NL PT SE**
Designated Extension States:
**AL LT LV MK RO SI**

(71) Applicant: **CORNING INCORPORATED**
**Corning, N.Y. 14831 (US)**

(72) Inventors:
• **Moroni, Marc, Corning Inc., Patent Department**
**Corning, NY 14831 (US)**

• **Vallon, Sophie, Corning Inc., Patent Department**
**Corning, NY 14831 (US)**

(74) Representative: **Finnie, Peter John et al**
**Elkington and Fife,**
**Prospect House,**
**8 Pembroke Road**
**Sevenoaks, Kent TN13 1XR (GB)**

(54)  **Athermalized polymer overclad integrated planar optical waveguide device and its manufacturing method**

(57)  The invention provides an athermalized polymer overclad integrated planar optical waveguide circuit device in which thermal induced shifting of channel wavelengths is minimized. The polymer overclad (30) inhibits the shifting of the channel wavelengths. The device includes a doped silica waveguide core (25,26,...) on a planar substrate (32) that is overclad with a polymer (30). The invention further includes the making of an athermalized integrated optical waveguide wavelength division multiplexer/demultiplexer.

# FIG.1

**Description**

Field of the Invention

The present invention relates to integrated planar optical waveguide devices. The invention relates to the method of making integrated optical waveguide devices in which the light transmitting properties are insensitive to temperature variations and fluctuations. More particularly, the present invention relates to athermalized integrated planar optical waveguide devices with polymer overclads.

Background of the Invention

Integrated optical waveguide devices, such as integrated optical circuits, combine miniaturized waveguides and optical devices into a functional optical system incorporated onto a small planar substrate. Such integrated optical waveguide devices are utilized in optical communications systems, usually by attaching optical waveguide fibers, that transmit light signals, to the integrated optical waveguide device as inputs and outputs. The integrated optical waveguide device performs a function or process on the transmitted light in the optical communications system. Such devices provide good performance at consistent standard room temperatures but exhibit poor performance when used in environments where they are exposed to thermal variations and fluctuations in temperature. The wavelength channels processed by the integrated optical waveguide device tend to shift with changes in operating temperatures. Integrated optical devices which incorporated optical path length differences can be used as wavelength multiplexing and demultiplexing devices. Such integrated optical devices are particularly useful as a wavelength division multiplexer/demultilexers, and may incorporate a phased array made from a plurality of different waveguide core arms which have differences in optical path length.

It has been found that the use of integrated optical waveguide devices is limited by their temperature dependence. In such integrated devices, thermal channel wavelength shifts of greater than 0.10nm/°C at a transmitting wavelength in the 1550 nm range can limit their usefulness in environments of differing temperature. Presently, the application of such integrated optical waveguide devices has been hindered by the requirement to consistently maintain the temperature of the device such as by actively heating or cooling the device. While such costly and energy consuming heating and cooling may suffice in a laboratory setting, there is a need for an integrated optical waveguide device that is manufacturable and can be deployed in the field and operate properly when subjected to temperature changes.

Summary of the Invention

The present invention is directed to an integrated optical waveguide device that substantially obviates one or more of the problems due to the limitations and disadvantages of the related art. The present invention provides an athermalized polymer overclad integrated planar optical waveguide circuit device which inhibits the shifting of channel wavelengths due to variations in operating temperature within a predetermined operating temperature range. In a preferred embodiment the invention provides an athermalized phased array wavelength division multiplexer/demultiplexer.

Additional features and advantages of the invention will be set forth in the description which follows, and in part will be apparent from the description or may be learned by practice of the invention. The objectives and other advantages of the invention will be realized and attained by the apparatus, compositions, and methods particularly pointed out in the written description and claims hereof as well as the appended drawings.

To achieve these and other advantages and in accordance with the purpose of the invention, as embodied and broadly described, the invention provides an integrated optical waveguide circuit device that includes a doped silica waveguide circuit core supported on a planar substrate. The planar substrate is a solid flat substrate (such as a silica wafer or a silicon wafer) which may further include an underclad or buffer layer (such as an undoped or lightly doped silica layer). The doped silica waveguide circuit core has a first waveguide path and at least a second waveguide path, wherein the waveguide paths have a difference of AL of path length that is selected to provide an optical path difference which corresponds to suitable channel wavelengths λ in the range of 1500-1600 nm and to a suitable free spectral range (with respect to the number of channels and to the channel spacing). The device includes a polymer overclad which clads the doped silica waveguide circuit core. The polymer overclad covers and encapsulates the waveguide circuit core, wherein light guided by the circuit core, the polymer overclad, and the planar substrate propagates in the circuit core, the polymer overclad and the planar substrate with the polymer overclad having a negative variation in refractive index versus temperature (dn/dT). The polymer overclad is selected such that the polymer overclad's negative variation in refractive index versus temperature (dn/dT) restricts the shift in the channel wavelength λ to less than 0.1 nm when the device is subjected to a temperature variation within the operating range of 0° to 70°C. In a preferred embodiment the device is a wavelength division multiplexer/demultiplexer with the waveguide paths forming a phased array.

In another aspect, the invention includes an athermalized integrated optical phased array wavelength division multiplexer/demultiplexer having a doped silica waveguide core on a planar substrate that is overclad with a polymer overclad comprised of fluorinated monomers.

In a further aspect, the invention comprises a method of making an optical waveguide wavelength division multiplexer/demultiplexer device. The method includes the steps of providing a planar substrate, and forming a doped silica waveguide core on the planar substrate with the waveguide core incorporating an optical path length difference which corresponds to a channel wavelength $\lambda$ in the wavelength range of 1500-1600nm. The method further includes overcladding the doped silica waveguide core with a polymer overclad having a negative variation in refractive index versus temperature (dn/dT), wherein the polymer overclad inhibits the shift of the channel wavelength $\lambda$ when the device is subjected to a variation in temperature.

The accompanying drawings are included to provide a further understanding of the invention and are incorporated in and constitute a part of this specification, illustrate embodiments of the invention, and together with the description serve to explain the principles of the invention.

Brief Description of the Drawings

FIG. 1 is a schematic top-view of an integrated optical waveguide circuit phased array wavelength division multiplexer/demultiplexer device embodying the invention.

FIG. 2 is a right side view of the device of FIG. 1.

FIG. 3 is an integrated optical waveguide circuit phased array wavelength division multiplexer/demultiplexer device embodying the invention.

FIG. 4 is a cross section left side view of FIG. 3 along dotted line 44.

FIG. 5a is a drawing of the monomer unit pentafluorostyrene (5FS).

FIG. 5b is a drawing of the monomer unit trifluorethylmethacrylate (3FEMA).

FIG. 5c is a drawing of the difunctional monomer unit glycidyl methacrylate (GMA).

FIG. 5d is a drawing of the adhesion promoter glycidoxypropyl trimethoxysilane (GlyMo).

FIG. 5e is a drawing of the adhesion promoter mercaptopropyl trimethoxysilane (MPMo).

FIG. 6a is a plot of refractive index (y-axis: 1.434 to 1.446) versus temperature curves for polymer overclads embodying the invention.

FIG. 6b is a plot of the refractive index (y-axis: 1.424 to 1.436) versus temperature of a formulation embodying the invention.

FIG. 7a is a photomicrograph of the end of a waveguide at the sawed edge of a device embodying the invention.

FIG. 7b is a near field microscopy photomicrograph of the waveguide of FIG. 7a propagating light.

FIG. 8 is a plot of the refractive index (y-axis: 1.4390 to 1.4435) versus duration of humidity exposure (75°C, 90%RH) duration, for compositions embodying the invention.

FIG. 9 is a plot of the mean channel wavelength versus temperature which discloses advantages of the invention.

FIG. 10. is a plot of measured channel wavelength (y-axis: 1551. 1nm to 1551.7 nm) versus temperature for a device embodying the invention.

Detailed Description

The invention comprises an integrated optical waveguide circuit device having a doped silica waveguide circuit core on a planar substrate.

Reference will now be made in detail to the present preferred embodiments of the invention, examples of which are illustrated in the accompanying drawings.

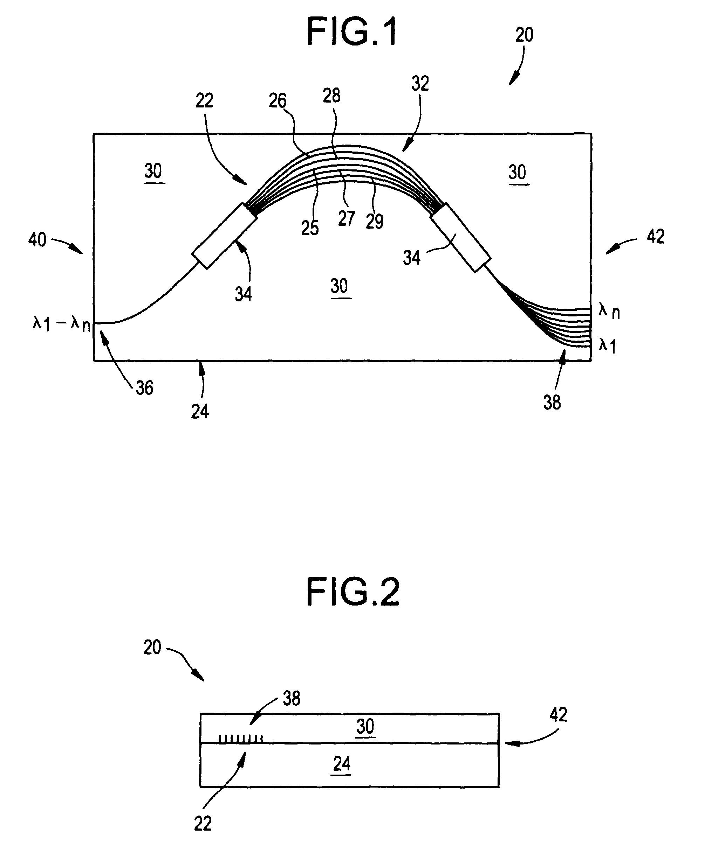

The exemplary embodiment of the integrated optical waveguide circuit device is shown in FIG. 1 and is designated generally by reference numeral 20.

As embodied herein and referring to FIG.1, integrated optical waveguide circuit device 20 includes a doped silica waveguide circuit core 22, with silica waveguide circuit core 22 on a planar substrate 24, preferably a flat planar silica substrate, such as a fused silica member, or a silicon wafer with a silica buffer layer. In the preferred embodiment integrated optical waveguide circuit device 20 is a phased array wavelength division multiplexer/demultiplexer with circuit core 22 having a phased array of waveguide paths. FIG. 1 illustrates the inventive integrated optical waveguide circuit phased array wavelength division multiplexer/demultiplexer with the actual device having more waveguides in terms of inputs, outputs and phased array waveguide paths.

Silica waveguide circuit core 22 is comprised of a first waveguide path 26 and at least a second waveguide path 28 which is preferably adjacent and substantially parallel. Adjacent waveguide paths, such as first waveguide path 26 and second waveguide path 28, have a path length difference $\Delta L$ that is selected to provide a suitable optical path difference. The optical path difference is selected to correspond to suitable channel wavelengths $\lambda$ in the range of 1500-1600 nm and to a suitable free spectral range. A polymer overclad 30 clads silica waveguide circuit core 22. Polymer overclad 30 encapsulates silica waveguide circuit core 22 supported by planar substrate 24 wherein light guided by silica waveguide circuit core 22, polymer overclad 30, and planar substrate 24 propagates in silica waveguide circuit core 22, polymer overclad 30, and planar substrate 24.

Polymer overclad 30 has a negative variation of refractive index versus temperature (dn/dT), and is selected such that the polymer overclad dn/dT inhibits the shift of channel wavelength $\lambda$ to less than 0.10 nm, preferably less than 0.05 nm when device 20 is subjected to temperature variations in the range of $0°$ to $70°C$. Preferably polymer overclad 30 and the negative variation of refractive index versus temperature dn/dT is selected to inhibit shifts of channel wavelength $\lambda$ to less than 0.01 nm.

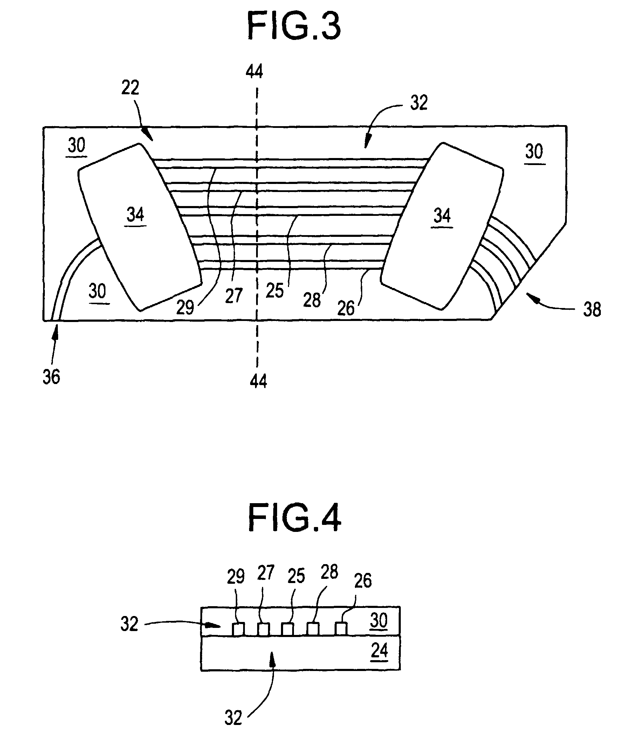

As shown in FIG. 1 and FIG.2, optical waveguide device 20 is an integrated wavelength division multiplexer/demultiplexer which includes a phased array 32 comprised of a plurality of waveguide paths, including waveguide paths 26 and 28. A limited number of waveguide paths in phased array 32 is shown to preserve the clarity of the drawing, and the present invention encompasses a phased array of 10s of waveguide paths, with the phased arrays having upwards of 100 waveguide paths. In FIG.1, from left side 40 to right side 42, integrated optical waveguide circuit phased array wavelength division multiplexer/demultiplexer 20 functions as a demultiplexer. A wavelength multiplexed signal is inputted into device 20, via input waveguide 36, with the multiplexed signal comprised of multiple wavelengths $\lambda$, depicted in FIG.1 as $\lambda_1$ through $\lambda_n$. Coupler region 34 couples the multiple wavelength signal into the waveguide paths of phased array 32. The plurality of waveguide paths in phased array 32 are preferably substantially parallel as depicted and adjacent to each other. The phased array waveguide paths have a path length difference $\Delta L$ that is selected to provide an optical path difference which corresponds to the channel wavelengths $\lambda$ of the multiple wavelength channels. Phased array 32 demultiplexes (separates) the wavelengths $\lambda_l$ through $\lambda_n$ such that they are coupled through second coupler 34 into their individual channel wavelength $\lambda$ output waveguides 38 that exit at right side 42. As shown in FIG.2, which is the right side view of device 20 of FIG.1, polymer overclad 30 encapsulates and surrounds doped waveguide circuit core 22. As shown in FIG.1-4, polymer overclad 30 encapsulates in that it completely covers and coats silica waveguide circuit core 22, except for that bottom portion of circuit core 22 that is in contact with planar substrate 24. Phased array 32 in FIG.3 shows first through fifth waveguide paths 26,28,25,27, and 29. As shown in FIG.4, which is a cross section view along dotted line 44, polymer overclad 30 encapsulates phased array 32 of circuit core 22 (all of the waveguide paths of phased array 32), and additionally is in contact with planar substrate 24.

Polymer overclad 30 should have a polymer overclad dn/dT in the range of $-4 \times 10^{-4}°C^{-1}$ to $-5 \times 10^{-5}°C^{-1}$ at 1550 nm between $0°$ and $70°C$, and preferably $-1.5 \times 10^{-4}°C^{-1}$ to $-5 \times 10^{-5}°C^{-1}$. In a preferred embodiment of the invention polymer overclad 30 has a polymer overclad dn/dT in the range of $(-1.0 \pm 0.2) \times 10^{-4}°C^{-1}$ at 1550 nm. Additionally, polymer overclad 30 has a refractive index (n) at 1550 nm, $20°C$, in the range of 1.35 up to an index slightly below the core index. Preferably the refractive index (n) at 1550 nm, $20°C$ is less than 1.48. The precise range of index useful for athermalizing device 20 depends on parameters such as core index, core dn/dT and core dimensions. In particular, the upper limit is determined by losses in curved waveguides and depends on the radius of curvature of waveguide circuit core 22. In a preferred embodiment, core index is $1.455 \pm 0.002$ at 1550 nm, $20°C$, with core dn/dT assumed to be equal to that of silica $(10^{-5}°C^{-1})$, and core dimensions are about $6 \times 6.5 \mu m$. In this case, the refractive index of polymer overclad 30 is in the range of 1.430 to 1.450 at 1550 nm, $20°C$, most preferably between 1.430 and 1.442 at 1550 nm, $20°C$. Further, the inventive polymer overclad 30 is a low loss optical polymer having an absorption coefficient of less than $2cm^{-1}$ at 1550 nm Polymer overclad 30 has a glass transition temperature (Tg) that is selected to be out of the operating temperature working range, preferably with Tg greater than $80°C$, most preferably with Tg greater than $85°C$. Polymer overclad 30 is an index stable optical polymer which exhibits an index variation less than $10^{-3}$, preferably less than $10^{-4}$, after exposure to humidity of 85% RH at $85°C$, and/or of 90% RH at $75°C$ during two weeks [85% (at $85°C$) to 90% (at $75°C$)], and after exposure to temperature variations from -40 to $85°C$ (10 cycles). Additionally polymer overclad is adherent to silica waveguide circuit core and remains adherent to the silica waveguide circuit core after exposure to humidity of 85% RH at $85°C$, and/or of 90% RH at $75°C$ weeks [85% (at $85°C$) to 90% (at $75°C$)] during two weeks, and after exposure to temperature variations from -40 to $85°C$ (10 cycles).

Inventive polymer overclad 30 is comprised of copolymers containing fluorinated monomers, preferably wherein the fluorinated monomers are selected from the vinylic, acrylic, methacrylic or allylic families (group consisting of vinylics, acrylics, methacrylics and allyics), also the copolymers containing fluorinated monomers are preferably synthesized with a free-radical process (thermally-induced or photo-induced). Polymer overclad 30 could be comprised of polymers or copolymers containing other families such as fluorodioxole. If the refractive index of the core material is higher than 1.5 at 1550 nm (with a different doping of the core material), new families could be used such as fluorinated polyimides. Pentafluorostyrene (5FS) and trifluoroethylmethacrylate (3FEMA) are the preferred fluorinated monomers of polymer overclad 30.

Based on the monomer batch reaction mixture, polymer overclad 30 is comprised of 15-70 wt.% pentafluorostyrene (5FS) and 30-85 wt.% trifluoroethylmethacrylate (3FEMA).

Polymer overclad 30 is improved when it contains a difunctional methacrylate-epoxy monomer, particularly when said difunctional methacrylate-epoxy monomer is glycidyl methacrylate (GMA). The difunctional methacrylate-epoxy monomer provides for cationical and/or thermal cross-linking of the copolymers after polymer overclad 30 has been deposited in solution over doped waveguide core 22 and planar substrate 24.

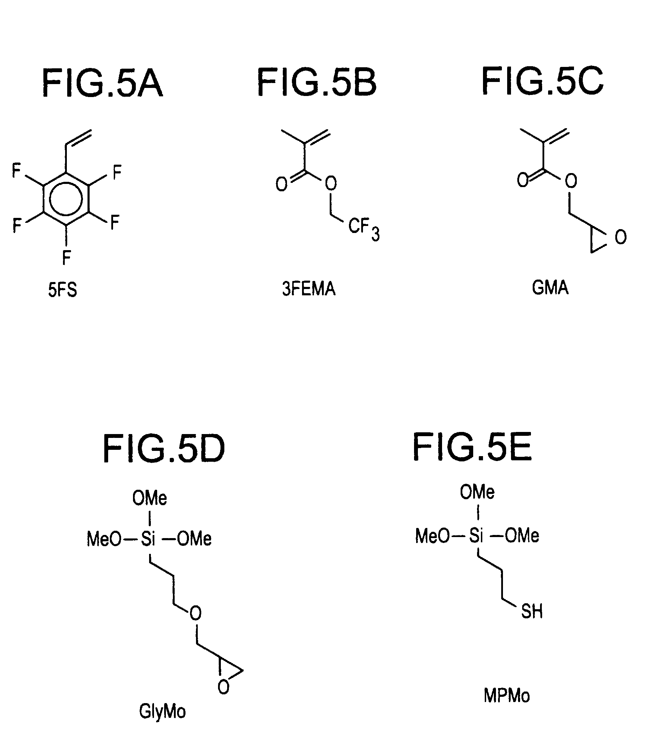

An improved polymer overclad 30 is also obtained when using the adhesion promoter glycidoxypropyl trimethoxy silane (GlyMo) or the adhesion promoter mercaptopropyl trimethoxy silane (MPMo). The overclad is improved when the core and the substrate surfaces are treated with GlyMo or by MPMo. The silanization process of the core and the substrate surfaces is obtained by dipping in a GlyMo solution or in a MPMo solution or by chemical vapor deposition of GlyMo or MPMo. Alternatively, the polymer overclad 30 can be improved when polymer overclad 30 includes GlyMo. FIG.5a is a molecular drawing of the fluorinated monomer pentafluorostyrene (5FS). FIG.5b is a molecular drawing of the fluorinated monomer trifluoroethylmethacrylate (3FEMA). FIG.5c is a molecular drawing of the difunctional methacrylate-epoxy monomer glycidyl methacrylate (GMA). FIG.5d is a molecular drawing of the component glycidoxypropyl trimethoxy silane (GlyMo). FIG. 5e is a molecular drawing of the component mercaptopropyl trimethoxy silane (MPMo).

The preferred batch reaction mixture of the invention is comprised of (30-65 wt.%) trifluoroethylmethacrylate (3FEMA), (20-65 wt.%) pentafluorostyrene (5FS) and (5-15 wt.%) glycidyl methacrylate (GMA). The preferred free-radical initiator is (0.1-5wt.%) 4,4' azobis (4-cyanovaleric acid) (ADVN) overall monomer concentration in THF.

The invention further comprises an athermalized optical waveguide device 20 which includes a doped silica waveguide core 22 on a planar substrate 24 and a polymer overclad 30 comprised of pentafluorostyrene (5FS) and trifluoroethylmethacrylate (3FEMA). Preferably the optical waveguide device 20 is a wavelength division multiplexer/demultiplexer, which most preferably utilizes a phased array of waveguide paths.

The composition of overclad 30 preferably further includes glycidyl methacrylate (GMA), 4, 4' azobis (4-cyanovaleric acid) (ADVN), and glycidoxypropyl trimethoxysilane (GlyMo). The (5FS) and (3FEMA) containing compositions of the invention provide a polymer overclad 30 which has a refractive index in the range of about 1.430-1.442 at 1550 nm, 20°C. The polymer overclad dn/dT should be in the range of $-4x10^{-4\circ}C^{-1}$ to $-5x10^{-5\circ}C^{-1}$ at 1550 nm between 0° and 70°C, and preferably - $1.5x10^{-4\circ}C^{-1}$ to $-5x10^{-5\circ}C^{-1}$. In a preferred embodiment, the polymer overclad has a dn/dT of about $(-1.0 \pm 0.2)x10^{-4\circ}C^{-1}$ at 1550nm. Preferably polymer overclad 30 has a Tg above 85°C, and surrounds and is adhered to the core except where the core is supported by the planar substrate.

The invention further includes a method of making an optical waveguide device 20 which includes the steps of providing a planar substrate 24 and forming a doped silica waveguide core 22 on the substrate with the core incorporating an optical path length difference which corresponds to a channel wavelength $\lambda$ in the 1500-1600 nm range. The method further includes the step of overcladding the doped silica waveguide core with a polymer overclad 30 which has a negative variation of refractive index versus temperature dn/dT wherein the overclad inhibits the shift of channel wavelength $\lambda$ when the device is subjected to a variation in temperature.

The inventive step of overcladding the doped silica waveguide core with a polymer overclad further comprises encapsulating doped silica waveguide with the polymer overclad. As shown in FIG.1-4 it is preferred to encapsulate the core 22 with polymer overclad 30 so that the core is completely covered, and additionally the planar surface of substrate 24 is covered. The polymer overclad dn/dT should be in the range of $-4x10^{-4\circ}C^{-1}$ to $-5x10^{-5\circ}C^{-1}$ at 1550 nm between 0° and 70°C. Preferably the step of overcladding said doped silica waveguide with a polymer overclad includes overcladding with a polymer overclad having a dn/dT in the range of $-1.5x10^{-4\circ}C^{-1}$ to $-5x10^{-5\circ}C^{-1}$ at 1550 nm, preferably about $(-1.0 \pm 0.2)x10^{-4\circ}C^{-1}$ at 1550nm, so that shifts of the channel wavelength $\lambda$ are minimized. Additionally the step of overcladding the doped silica waveguide core with a polymer overclad preferably includes overcladding the doped silica waveguide with a polymer overclad having a refractive index in the range of about 1.430-1.442 at 1550 nm, 20°C, and the polymer overclad should have a low absorption coefficient in the range of 0.2 $cm^{-1}$ at 1550 nm. It is preferred that polymer overclad 30 has a Tg greater than 80°C. Such a Tg provides for beneficial use of the method and the device produced.

The inventive method of making an athermalized optical waveguide device is particularly suited for making an integrated optical phased array wavelength division multiplexer/demultiplexer and as such the step of forming a doped silica waveguide core on the planar substrate further comprises forming a phased array of optical paths, preferably a plurality of substantially parallel optical paths that have different optical path lengths.

The inventive method includes the step of providing polymer overclad 30, which is then applied to core 22 and substrate 24 in order to inhibit the thermally induced shifts of the channel wavelengths. The providing of polymer overclad 30 includes synthesizing a copolymer composition containing fluorinated monomers, preferably via a free-radical process, and also includes adding a difunctional methacrylate-epoxy monomer to the synthesized copolymer composition. Such a monomer provides for cross linking of the copolymers after the polymer overclad composition is applied in a solution over core 22.

Additionally synthesizing the copolymer composition of polymer overclad 30 comprises synthesizing in a THF (tetrahydrofuran) solution with 4, 4' azobis (4-cyanovaleric acid) (ADVN) as a free-radical initiator. This lowers the polymerization temperature and avoids undesired early cross-linking of the composition. Improved adhesion and durability of the core-overclad interface is achieved when adhesion promoter GlyMo or MPMo are used to treat the core and substrate surface or when GlyMo is added to polymer overclad 30 before overcladding doped silica waveguide core 22. Addition of the adhesion promoters GlyMo or MPMo prior to application reduces the sensitivity to hydrolysis. The preferred polymer overclad of the invention is comprised of pentafluorostyrene (SFS), trifluoroethylmethacrylate (3FEMA), glycidyl methacrylate (GMA), with 4, 4' azobis (4-cyanovaleric acid) (ADVN) as a polymerization initiator. Additionally this composition is provided in a solution with AcOEt (ethyl acetate), for overclad application to core 22 on planar substrate 24. The solution is applied by a liquid phase solution deposition to core 22, such as by spin coating, dip coating or dropping the solution and evaporation of the solvent.

The wavelength division multiplexer/demultiplexer of the invention requires a precise control of the optical path difference between adjacent waveguide paths of the phased array. The optical path difference (OPD) can be expressed as n x $\Delta$L, where n is the effective index of the fundamental mode in the optical waveguide path and $\Delta$L is the physical path length difference between adjacent waveguide paths. The central wavelength $\lambda$ of device 20's channels is determined by m$\lambda$=OPD=n x $\Delta$L, where m is an integer.

The variation of channel wavelength is expressed in the following equation, where $\lambda$ is the channel wavelength and T the temperature:

$$\frac{d\lambda}{dT} = \lambda\left(\frac{1}{n} \, x \, \frac{dn}{dT} + \frac{1}{\Delta L} \, x \, \frac{d\Delta L}{dT}\right)$$

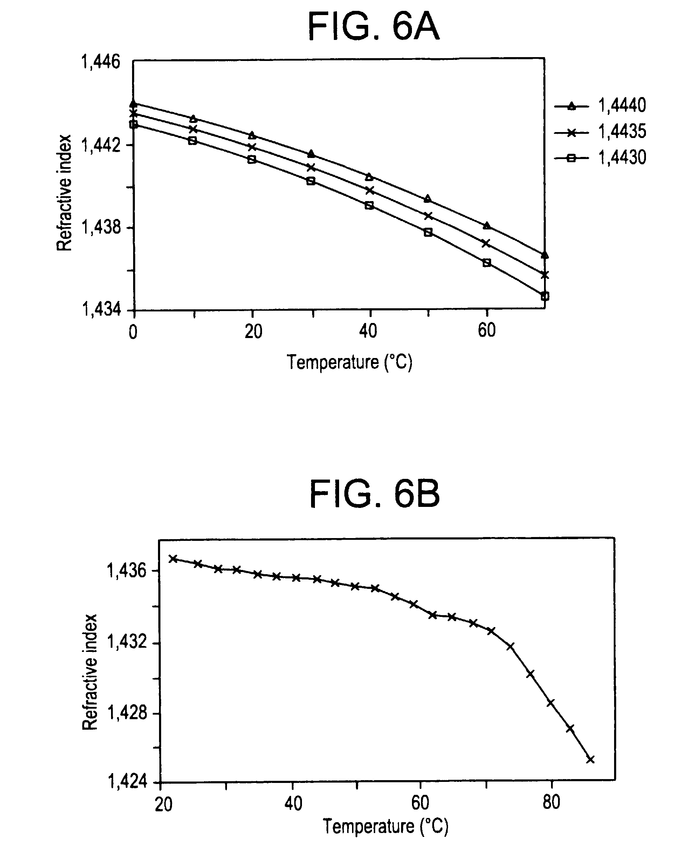

Both, the effective index n and the physical path length difference $\Delta$L, are temperature dependent (for a doped silica waveguide on a silica substrate, 1/n x dn/dT $\approx$ 7 x $10^{-6}$°C$^{-1}$, and 1/$\Delta$L x d$\Delta$L/dT $\approx$ 5 x $10^{-7}$°C$^{-1}$). The first term relating to n is largely prevailing and this leads to a positive shift of channel wavelength $\lambda$ in silica based optical waveguide devices. The second term 1/$\Delta$L x d$\Delta$L/dT corresponds to the coefficient of thermal expansion of substrate 24. The polymer overclads of the invention provide a negative variation of their refractive index versus temperature. The fundamental mode effective index of the inventive polymer overcladded optical waveguide device 20 depends on the doped silica core 22 material index (positive dn/dT), on the silica underclad or substrate 24 material index (positive dn/dT) and on the polymer overclad 30 material index (negative dn/dT). The optical signals in device 20 propagate not only in the core, but also in the clad. The polymer overclad 30 compensates for the thermal effects (index and physical path) on the doped silica waveguide core 22 and the silica underclad and cancel the temperature dependence of device 20, so that the shift of channel wavelength $\lambda$ is inhibited to less than 0.1 nm, preferably less than 0.05nm at temperatures in the working range of 0° to 70°C. As an example, theoretical n(T) curves (refractive index at 1550 nm versus temperature) for overclads enabling athermalization of the device of the invention are shown in FIG. 6a. Curves (triangle, x, square) correspond to different assigned index values at 0°C (1.4440, 1.4435 and 1.4430 respectively), and the index values at higher temperature were calculated in order to keep the channel wavelengths constant. FIG. 6a demonstrates that the index curve n(T) of the polymer overclad should not be linear, and that dn/dT should become more negative at higher temperatures, in order to athermalize the device of the invention. FIG. 6a also shows that several polymer overclad compositions with different n(T) curves may give the same result in terms of athermalization. Consequently, for a given dn/dT the index value at 0°C may be adjusted in order to athermalize the device of the invention. The inventive polymer overclad compositions and methods allow precise adjustment of the polymer overclad index, and provide for the athermalized characteristics.

The polymer overclad 30 of the invention was formulated to fulfill the optical and thermal behavior characteristics of n = 1.430 to 1.442 at 1550 nm and 20°C, dn/dT close to -1 x $10^{-4}$°C$^{-1}$ at 1550 nm, low loss and good optical quality at 1550 nm, good stability in temperatures of -40° to 85°C and in humidity at 75° and 85°C. In the development of the invention, a series of copolymers containing various amounts of the monomer units pentafluorostyrene (5FS) (see FIG.5a) and trifluoroethylmethacrylate (3FEMA) (see FIG.5b) were formulated and synthesized via free-radical process to meet the requirements of tuning n and providing a Tg above the working temperature range of the device. These fluorinated materials were chosen to enhance both hydrophobicity and transparency in the near IR (1500-1600 nm). The formulations are shown in TABLE 1.

TABLE 1

| Formulation | | |
|---|---|---|
| P5FS; 3FEMA | n (1550 nm, 20°C) | dn/dT (1550 nm) |
| 45wt.%, 55wt.% | 1.430 | |
| 47wt.%, 53wt.% | 1.433 | $-7.10^{-5}°C^{-1}$ (30-60°C) |
| 50 wt.%, 50wt% | 1.437 | $-7.10^{-5}°C^{-1}$ (20-60°C) |

The percentages in weight of each monomer are given from the monomer reaction mixtures. FIG.6b is the refractive index versus temperature of the copolymer P5FS, 3FEMA 50,50 formulation. The thermograms of this formulation in FIG.6b exhibit a change in slope at 70°-75°C which is in good agreement with the Tg measured by differential scanning calorimetry.

The composition of polymer overclad 30 was developed to adjust precisely the refractive index and its temperature dependence. An improved Tg above the working temperature of the device and improved adhesion on silica were achieved. Additionally the index was stabilized to $\Delta n$ less than few $10^{-4}$, which is the sensibility limit for the measurements, after temperature tests of -40° to 85°C and aging tests of 90% humidity at 75°C and 85% humidity at 85°C.

A series of copolymers containing fluorinated monomers (styrene, acrylates, and methacrylates) was prepared via a free-radical process. The formulations of polymer overclad 30 improved on the stability of the silica adhesion of the earlier formulations and increased the Tg above the previous 60°-70°C range which is near the limits of the working temperature of the device.

A difunctional methacrylate-epoxy monomer of glycidyl methacrylate (GMA) (See FIG.5c) was added to the inventive formulation in order to cross-link the material after it is deposited in solution. Such difunctional monomer epoxy groups can cross-link cationically or thermally. They can also tether on the silica surface by covalent bonding or Si-OH groups and thus improve adhesion (but was noted that the Si-O-C link is sensitive to hydrolysis). The radical polymerization of the formulation was run in THF (tetrahydrofuran) solution (boiling point 65°C) and with 4, 4' azobis (4-cyanovaleric acid) (ADVN), which has a low decomposition temperature, in order to lower the polymerization temperature and to avoid undesired early cross-linking.

Further improvements were made by using adhesion promoters. The adhesion promoters can be silanes containing groups such as Si-OMe, Si-OEt, or Si-Cl that can condense on the silica core 22 and silica substrate or underclad 24, and groups such as epoxy, thiol or amine that can tether to the epoxy moities. The adhesion promoters can be used as a surface treatment on the silica core and substrate or underclad and/or can be added to the polymer overclad solution prior to overcladding silica core 22 and planar substrate 24. The surface treatment can be performed by dipping the device comprised of core 22 and substrate 24 prior to the overcladding in a solution containing the adhesion promoter, by chemical vapor deposition (CVD) of the adhesion promoter on the core 22 and the substrate 24 or by spraying the adhesion promoter or an adhesion promoter solution on the core 22 and substrate 24. The polymer-silica interface is not sensitive to hydrolysis when these grafting techniques are utilized. The adhesion promoter mercaptopropyl trimethoxy silane (MPMo) was used by CVD and by dipping, the adhesion promoter glycidoxypropyl trimethoxy silane (GlyMo) was used by CVD, by dipping and by mixing in the polymer solution.

The solvent used to dissolve and lay the copolymer 30 may be selected from tetrahydrofuran, chloroform, methylene chloride, toluene, and solvents from the ketone and the ester families. Good results are obtained with ethyl acetate (AcOEt). The solution of copolymer (typically 35% copolymer and 65% AcOEt by weight) provides for spin coating polymer overclad on device 20 after surface treatment with adhesion promoters MPMo or GlyMo. The solution of the copolymer and GlyMo (typically 0.5-2% GlyMo, 33-35% copolymer, 65% AcOEt by weight) provides for spin coating polymer overclad 30 on the bare silica surfaces of device 20. The overcladded device 20 is then heated to condense the silanes on the surface and/or to dry the polymer overclad. Such heating can be achieved in an oven, and done for about 16 hours at about 55°C. The device is then cured by thermal treatment. A proper thermal treatment cure is achieved at about 135°C to 150°C for about 3 hours.

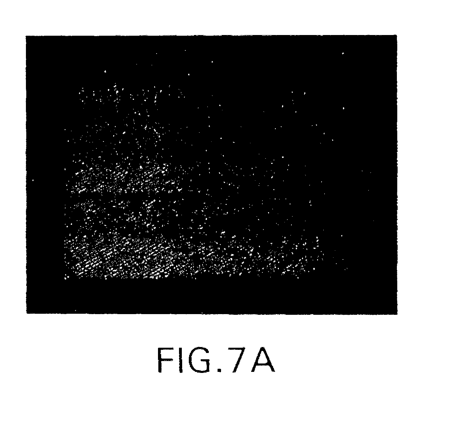

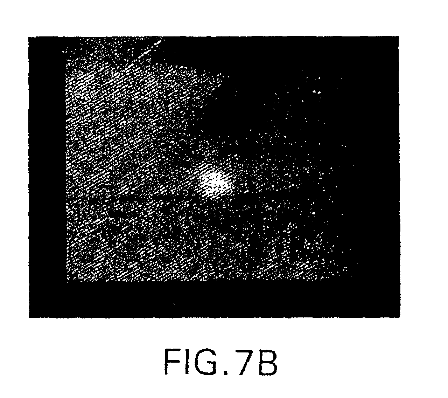

A formulation of 65 wt.%3FEMA, 20wt.% 5FS and 15wt.%GMA, initiated with (0.5-2 wt.%) ADVN, is a beneficial composition for polymer overclad 30. This polymer was overcladded on doped silica waveguides supported on a silica substrate. The improved adhesion and cohesion of the polymer overclad allowed for the sawing of the edges with a standard 15 µm thick abrasive. FIG. 7a and 7b are photomicrographs of the edge of a polymer cladded optical waveguide. FIG. 7a is a micrograph of the edge of the sawed silica waveguide overcladded with the polymer overclad. FIG. 7b is a near field microscopy picture of the same waveguide, with the device propagating light.

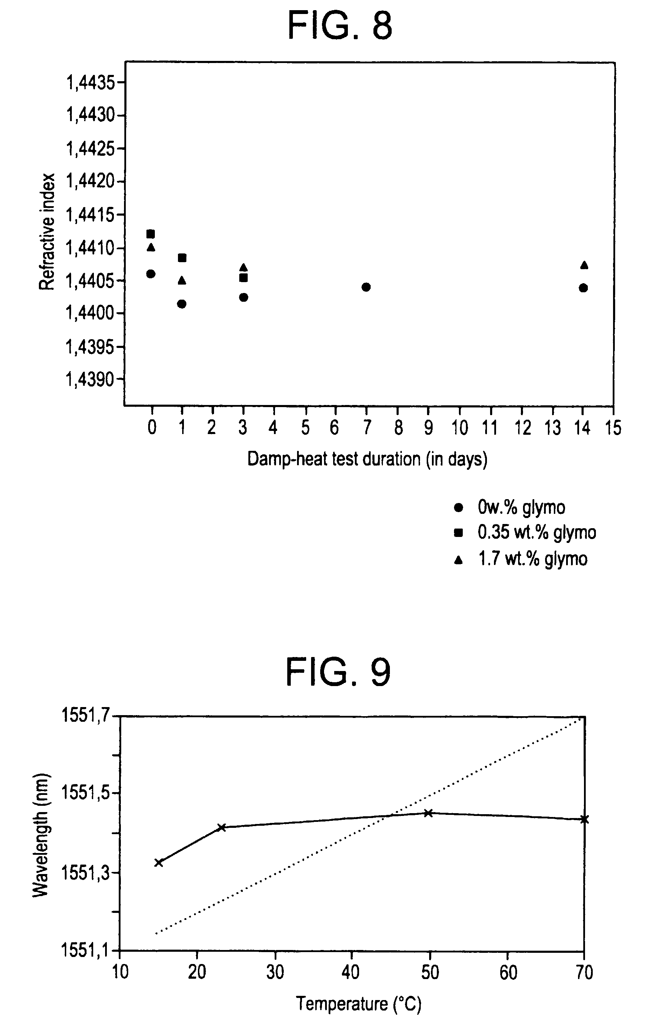

The refractive index of the polymer of the invention was measured by the m-lines prism coupling technique, and its temperature dependence by backreflectance at the end of a fiber. With the formulation of 65 wt.% 3FEMA, 20 wt.% 5FS and 15 wt.% GMA, the refractive index was 1.432 at 20°C, 1550 nm; the dn/dT was -1.2 x $10^{-4}$°$C^{-1}$ at 1550 nm before crosslinking. In order to investigate the index stability after exposure to temperature variations and to humidity, silica surfaces treated by CVD with GlyMo were spin coated with the copolymer solution (35wt.% copolymer and 65 wt.% AcOEt by weight). Bare silica surfaces were spin coated with GlyMo-copolymer mixtures: a = 0.35 wt.% GlyMo, 34.65 wt.% copolymer, 65 wt.% AcOEt; b = 1.7 wt.% GlyMo, 33.3 wt.% copolymer, 65 wt.% AcOEt. The samples were dried and cured. Their refractive indexes at 633 nm were measured before and after 1, 3, 7 and 14 days of exposure to 90%RH humidity at 75°C. FIG. 8 shows the indexes of the copolymer layers versus duration of test. The variations observed remain in the sensibility limits of the measurement (a few $10^{-4}$). The samples were further submitted to temperature variations between -40° and 85°C (10 cycles). Again the change in refractive index was within the sensibility limits.

Losses were measured on different devices overcladded with the polymer of the invention. Losses of 1.6 dB were obtained on straight waveguides, while minimum insertion losses of 5 dB and 10 dB were obtained on a Mach-Zehnder interferometer and on a phased array wavelength division demultiplexer respectively.

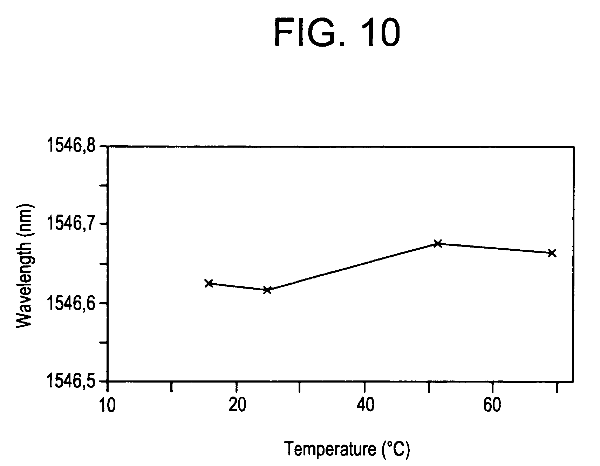

A phased array doped silica core wavelength division demultiplexer 20 was prepared by reactive ion etching a flame hydrolysis deposited core layer supported on a fused silica substrate. The device was overcladded with a GlyMo-copolymer mixture (1.7 wt.% GlyMo, 33.3 wt.% copolymer, 65 wt.% AcOEt), the formulation of the copolymer being 65 wt.% 3FEMA, 20 wt.% 5FS and 15 wt.% GMA, initiated with (0.5-2 wt.%) ADVN. The device was measured at 15°, 23°, 50° and 70°C. The temperature was varied by laying the device on a Peltier element. FIG. 9 is the plot of the mean channel wavelength versus temperature for a device overcladded with silica (dotted line 60 calculated with $d\lambda/dT$ = + 0.01 nm/°C), and for the device overcladded with the polymer of the invention (solid line 52, measured). These measurements show that the channel wavelengths remain in a range of 0.10 nm between 20 and 70°C. In order to further reduce the temperature dependence of the device of the invention, a copolymer with a higher refractive index was formulated. The formulation of this copolymer (formulation #2) was 55 wt.% 3FEMA, 35 wt.% SFS, and 10 wt.% GMA, initiated with (0.5-2 wt.%) ADVN. The refractive index of the copolymer (measured by the m-lines prism coupling technique) was 1.434 at 20°C, 1550 nm. A phased array doped silica core wavelength division demultiplexer 20 was prepared by reactive ion etching a flame hydrolysis deposited core layer supported on a fused silica substrate. The doped silica core index was 1.453 at 1550 nm, 20°C and the waveguide dimensions (width x height) were 6.3 x 6.8 μm. The device 20 was treated with MPMo by CVD, then overcladded with a solution of the copolymer (35 wt.% copolymer, 65 wt.% AcOEt) by spin-coating. FIG. 10 is the plot of a channel wavelength versus temperature for this device. These measurements show that the channel wavelength remains in a range of 0.05 nm between 15 and 70°C.

It will be apparent to those skilled in the art that various modifications and variations can be made in the methods, compositions, and devices of the present invention without departing from the spirit or scope of the invention. Thus, it is intended that the present invention covers the modifications and variations of this invention provided they come within the scope of the appended claims and their equivalents.

## Claims

1.    An integrated optical waveguide circuit device, said device comprising:

a doped silica waveguide circuit core, said silica waveguide circuit core supported on a planar substrate; said silica waveguide circuit core including a first waveguide path and at least a second waveguide path, said first waveguide path and said second waveguide path having a path length difference $\Delta L$ that is selected to provide an optical path difference which corresponds to a channel wavelength $\lambda$; and

a polymer overclad, said polymer overclad cladding said silica waveguide circuit core, said polymer overclad covering said silica waveguide circuit core wherein light guided by said silica waveguide circuit core, said polymer overclad and said planar substrate propagates in said silica waveguide circuit core, said polymer overclad and said planar substrate, said polymer overclad having a negative variation of refractive index versus temperature (dn/dT), said polymer overclad selected such that said polymer overclad dn/dT inhibits the shift of said channel wavelength $\lambda$ to less than 0.10 nm when said device is subjected to a temperature variations in the range of 0° to 70°C.

2.    An integrated optical waveguide circuit device as claimed in claim 1 wherein said polymer overclad dn/dT inhibits the shift of said channel wavelength $\lambda$ to less than 0.05 nm when said device is subjected to temperature variations in the range of 0° to 70°C, preferably said polymer overclad dn/dT inhibits the shift of said channel wavelength $\lambda$ to less than 0.01 nm.

3.    An integrated optical waveguide circuit device as claimed in claim 1 wherein said polymer overclad dn/dT is in the

range of $-4 \times 10^{-4}°C^{°-1}$ to $-5 \times 10^{-5}°C^{-1}$ at 1550 nm between 0° and 70 °C, preferably said polymer overclad dn/dT is in the range of $-1.5 \times 10^{-4}°C^{-1}$ to $-5 \times 10^{-5}°C^{-1}$, and more preferably said polymer overclad dn/dT is in the range of $(-1.0 \pm 0.2) \times 10^{-4}°C^{-1}$.

4.  An integrated optical waveguide circuit device as claimed in claim 1 wherein said doped silica waveguide circuit core has a core refractive index ($n_{core}$) and said polymer overclad has a refractive index (n) at 1550 nm and 20°C such that $n_{core}$ > n≥1.35, and preferably said polymer overclad refractive index n is in the range of 1.43 to 1.45, and most preferably said core refractive index is in the range of $1.455 \pm 0.002$ and said polymer overclad refractive index n is in the range of 1.430 to 1.442 at 1550 nm and 20°C.

5.  An integrated optical waveguide circuit device as claimed in claim 1, said polymer overclad comprised of a polymer overclad composition, such that an adjustment of said polymer overclad composition adjusts the polymer overclad refractive index so that the shift of said channel wavelength λ between 0°C and 70°C is minimized.

6.  An integrated optical waveguide circuit device as claimed in 1 wherein said polymer overclad has an absorption coefficient of less than $2 cm^{-1}$ at 1550 nm.

7.  An integrated optical waveguide circuit device as claimed in claim 1 wherein said polymer overclad has a glass transition temperature (Tg) greater than 70°C, preferably Tg greater than 80°C.

8.  An integrated optical waveguide circuit device as claimed in claim 1 wherein said polymer overclad is an index stable optical polymer which has an index variation less than $10^{-3}$ after exposure to humidity in the range of 85% RH to 90% RH at temperatures from 85°C to 75°C for about two weeks and after exposure to 10 cycles of temperature variations from -40° to 85°C, preferably wherein said index variation is less than $10^{-4}$.

9.  An integrated optical waveguide circuit device as claimed in claim 1 wherein said polymer overclad is adherent to said silica waveguide circuit core and to said planar substrate, preferably said adherent polymer overclad remains adherent to said silica waveguide circuit core and to said planar substrate after exposure to humidity in the range of 85% RH (at 85°C) to 90% RH (at 75°C) for about two weeks and after exposure to 10 cycles of temperature variations from -40° to 85°C.

10. An integrated optical waveguide circuit device as claimed in claim 1 wherein said polymer overclad completely covers said first waveguide path and said second waveguide path of said silica waveguide circuit core supported by said planar substrate.

11. An integrated optical waveguide circuit device as claimed in claim 1 wherein said polymer overclad is comprised of copolymers containing fluorinated monomers, preferably said fluorinated monomers are selected from the group consisting of the vinylic, acrylic, methacrylic and allylic families.

12. An integrated optical waveguide circuit device as claimed in claim 11 wherein said copolymers containing fluorinated monomers are synthesized with a free-radical process, preferably by thermal inducement, photo-inducement, or thermal and photo-inducement.

13. An integrated optical waveguide circuit device as claimed in claim 11 wherein said fluorinated monomers are comprised of pentafluorostyrene (5FS) and trifluoroethylmethacrylate (3FEMA), preferably the monomer batch reaction mixture is 15-70 wt.% pentafluorostyrene (5FS) and 30-85 wt.% trifluoroethylmethacrylate (3FEMA), and more preferably 30-50 wt.% 5FS and 50-70 wt.% 3FEMA.

14. An integrated optical waveguide circuit device as claimed in claim 11 wherein said polymer overclad is further comprised of a difunctional monomer, said difunctional monomer comprised of a first free radical polymerization reaction group and a second curable chemical group, said second curable chemical group being non-reactive to free radical polymerization, preferably said first free radical polymerization reaction group is selected from the selection group consisting of a vinylic group, an acrylic group, a methacrylic group and an allylic group and preferably said second curable chemical group is reactive to cationic curing, thermal curing, or cationic and thermal curing.

15. An integrated optical waveguide circuit device as claimed in claim 14 wherein said second curable chemical group is an epoxy group, preferably said first free radical polymerization reactive group is comprised of a methacrylate group and said second curable chemical group is comprised of an epoxy group.

16. An integrated optical waveguide circuit device as claimed in claim 14 wherein said difunctional monomer provides for the cross-linking of the copolymers, preferably said difunctional monomer is glycidyl methacrylate (GMA).

17. An integrated optical waveguide circuit device as claimed in claim 1 wherein said polymer overclad is synthesized by a free radical process in a solution, preferably said polymer overclad is synthesized by a free radical process initiated by 4, 4' azobis (4-cyanovaleric acid) (ADVN).

18. An integrated optical waveguide circuit device as claimed in claim 1 wherein said polymer overclad is further comprised of an adhesion promoter, preferably said adhesion promoter is a silane, preferably said silane adhesion promoter contains at least one group selected from the selection group consisting of a Si-OMe group, Si-OEt group and Si-Cl group, preferably said silane adhesion promoter contains at least one epoxy group, preferably said silane adhesion promoter is comprised of glycidoxypropyl trimethoxy silane (GlyMo), preferably with the polymer overclad comprised of 1-5 wt.% GlyMo.

19. An integrated optical waveguide circuit device as claimed in claim 11 wherein said polymer overclad batch reaction mixture is comprised of 30-65 wt.% trifluroethylmethacrylate (3FEMA), 0-30 wt.% glycidyl methacrylate (GMA), and 20-65 wt.% pentafluorostyrene (SFS), preferably 45-60 wt.% 3FEMA, 30-45 wt.% 5FS, 5-15 wt.% GMA, preferably said polymer overclad batch reaction mixture includes a free-radical initiator, preferably said free radical initiator is comprised of 4,4' azobis (4-cyanovaleric acid) (ADVN).

20. An integrated optical waveguide circuit device as claimed in claim 19 wherein said monomers are polymerized in a solution of tetrahydrofuran (THF), preferably an overall monomer concentration vs. THF 1-50 wt.%.

21. An integrated optical waveguide circuit device as claimed in claim 19 wherein said polymer overclad is cured by a thermal treatment, preferably in a temperature range from 120° to 160°C and a time range from 0.1 to 24 hours.

22. An athermalized optical waveguide device comprised of:

   a planar substrate
   a doped silica waveguide core supported on said planar substrate; and
   a polymer overclad, said polymer overclad comprised of fluorinated monomers.

23. An athermalized optical waveguide device as claimed in claim 22 wherein said fluorinated monomers are comprised of pentafluorostyrene (5FS) and trifluoroethylmethacrylate (3FEMA).

24. An athermalized optical waveguide device as claimed in claim 22 wherein said planar substrate comprises a silica wafer.

25. An athermalized optical waveguide device as claimed in claim 22 wherein said planar substrate comprises an underclad buffer layer, preferably said buffer layer comprises silica.

26. An athermalized optical waveguide device as claimed in claim 22 wherein said polymer overclad is comprised of glycidoxypropyl trimethoxy silane (GlyMo).

27. An athermalized optical waveguide device as claimed in claim 22 wherein said polymer overclad is further comprised of a difunctional monomer comprised of a first free radical polymerization reactive group and a second curable chemical group, said second curable chemical group being non-reactive to free radical polymerization.

28. An athermalized optical waveguide device as claimed in claim 22 wherein said polymer overclad is further comprised of a difunctional methacrylate-epoxy monomer, preferably said difunctional monomer is glycidyl methacrylate (GMA).

29. An athermalized optical waveguide device as claimed in claim 22 wherein said polymer overclad is further comprised of an adhesion promoter.

30. An athermalized optical waveguide device as claimed in claim 22 wherein said polymer overclad is further comprised of a silane, preferably a silane containing at least one Me-O-Si group.

31. An athermalized optical waveguide device as claimed in claim 22 wherein said polymer overclad is comprised of glycidyl methacrylate (GMA), pentafluorostyrene (5FS) and trifluoroethylmethacrylate (3FEMA), preferably based on the batch reaction mixture:

> 30-65 wt.% 3FEMA,
> 20-65 wt.% SFS, and
> 0-30 wt.% GMA, more preferably
> 45-60 wt.% 3FEMA
> 30-45 wt.% 5FS and
> 5-15 wt.% GMA, preferably said polymer overclad batch reaction mixture includes a free-radical initiator, preferably said free-radical initiator is ADVN.

32. An athermalized optical waveguide device as claimed in claim 23 wherein said polymer overclad has been polymerized in a THF solution.

33. An athermalized optical waveguide device as claimed in claim 22 wherein said doped silica waveguide core has a core refractive index ($n_{core}$) and said polymer overclad has a refractive index (n) at 1550 nm and 20°C such that $n_{core} > n \geq 1.35$, preferably said polymer overclad refractive index is in the range of 1.43 to 1.45 at 1550 nm and 20°C, more preferably said core refractive index is in the range of $1.455 \pm 0.002$ and said polymer overclad refractive index is in the range of 1.430 to 1.442 at 1550 nm and 20°C.

34. An athermalized optical waveguide device as claimed in claim 22 wherein said polymer overclad has a dn/dT in the range of about $-4 \times 10^{-4}°C^{-1}$ to $-5 \times 10^{-5}°C^{-1}$ at 1550nm between 0° and 70°C, preferably $-1.5 \times 10^{-4}°C^{-1}$ to $-5 \times 10^{-5}°C^{-1}$, more preferably $(-1.0 \pm 0.2) \times 10^{-4}°C^{-1}$.

35. An athermalized optical waveguide device as claimed in claim 22 wherein said device is comprised of a wavelength division multiplexer/demultiplexer.

36. An athermalized optical waveguide device as claimed in claim 22 wherein said core is comprised of an array of optical waveguide paths, preferably a phased array of optical waveguide path lengths, and preferably said polymer overclad surrounds and is adhered to at least said phased array of optical waveguide path lengths.

37. An athermalized optical waveguide device as claimed in claim 22 wherein said device is comprised of a Mach-Zehnder interferometer.

38. An athermalized optical waveguide device as claimed in claim 22 wherein said polymer overclad surrounds and is adhered to said core except where said core is supported by said planar substrate.

39. An athermalized optical waveguide device as claimed in claim 22 wherein said polymer overclad has a Tg outside of the range of 0-70°C, preferably greater than 80°C.

40. A method of making an optical waveguide device, said method comprised of:

> providing a planar substrate;
> forming a doped silica waveguide core on said planar substrate, said core comprised of an optical path length difference which corresponds to a channel wavelength $\lambda$ in the wavelength range of 1500-1600nm, overcladding said doped silica waveguide core with a polymer overclad having a negative variation of refractive index versus temperature (dn/dT) wherein said polymer overclad inhibits the shift of said channel wavelength $\lambda$ when said device is subjected to a variation in temperature.

41. A method as claimed in claim 40 wherein said step of overcladding said doped silica waveguide core with a polymer overclad further comprises encapsulating said doped silica waveguide with said polymer overclad.

42. A method as claimed in claim 40 wherein said step of overcladding said doped silica waveguide core with a polymer overclad further comprises overcladding said doped silica waveguide with a polymer overclad having a dn/dT in the range of about $-4 \times 10^{-4}°C^{-1}$ to $-5 \times 10^{-5}°C^{-1}$ at 1550 nm between 0° and 70°C, preferably $-1.5 \times 10^{-4}°C^{-1}$ to-

$5 \times 10^{-5}$°$C^{-1}$, and more preferably $(-1.0 \pm 0.2) \times 10^{-4}$°$C^{-1}$.

**43.** A method as claimed in claim 40 wherein said doped silica waveguide core has a core refractive index ($n_{core}$), and said step of overcladding said doped silica waveguide core with a polymer overclad further comprises overcladding said doped silica waveguide with a polymer overclad having a refractive index (n) at 1550 nm and 20°C such that $n_{core} > n \geq 1.35$, preferably said polymer overclad refractive index is in the range of 1.43 to 1.45 at 1550 nm and 20°C, more preferably said core refractive index is in the range of $1.455 \pm 0.002$ and said polymer overclad refractive index is in the range of 1.430 to 1.442 at 1550 nm and 20°C.

**44.** A method as claimed in claim 40 wherein said step of overcladding said doped silica waveguide core with a polymer overclad further comprises overcladding said doped silica waveguide with a polymer overclad having an absorption coefficient of less than 2cm$^{-1}$ at 1550 nm.

**45.** A method as claimed in claim 40 wherein said step of forming a doped silica waveguide core on said planar substrate further comprises forming a plurality of substantially parallel optical paths that have different optical path lengths, preferably forming a phased array.

**46.** A method as claimed in claim 40 wherein said step of overcladding said doped silica waveguide core with a polymer overclad further comprises synthesizing a copolymer composition containing fluorinated monomers via a free-radical process, preferably by adding a difunctional monomer comprised of a first free radical polymerization reactive group and a second curable chemical group, said second curable chemical group being non-reactive to free radical polymerization to said copolymer composition, preferably by adding a difunctional methacrylate-epoxy monomer, more preferably said difunctional monomer is glycidyl methacrylate (GMA).

**47.** A method as claimed in claim 46 wherein synthesizing a copolymer composition comprises synthesizing in a THF solution with 4, 4' azobis (4-cyanovaleric acid (ADVN) as a thermal initiator.

**48.** A method as claimed in claim 40 wherein an adhesion promoter is added to the polymer overclad before overcladding said doped silica waveguide, preferably said adhesion promoter is comprised of a silane, preferably said adhesion promoter is a silane which contains at least one group selected from the selection group consisting of a Me-O-Si group, a Et-O-Si group or a Cl-Si group, preferably said adhesion promoter contains a group selected from the selection group consisting of an epoxy group, an amino group, and a thiol group, preferably said adhesion promoter comprises glycidoxypropyl trimethoxy silane (GlyMo).

**49.** A method as claimed in claim 40 wherein an adhesion promoter is applied to said planar substrate and said doped silica waveguide core, preferably by dipping said substrate and core into a solution of said adhesion promoter, or by spraying said substrate and core with a solution of said adhesion promoter, or by chemical vapor deposition.

**50.** A method as claimed in claim 49 wherein said adhesion promoter is comprised of a silane, preferably a silane which contains at least one group selected from the selection group consisting of a Me-O-Si group, a Et-O-Si group or a Cl-Si group.

**51.** A method as claimed in claim 49 wherein said adhesion promoter contains a group selected from the selection group consisting of an epoxy group, an amino group, and a thiol group.

**52.** A method as claimed in claim 49 wherein said adhesion promoter comprises GlyMo, or 3-mercaptopropyl trimethoxy silane (MPMo).

**53.** A method as claimed in claim 40 wherein said polymer overclad is comprised of pentafluorostyrene (SFS), trifluoroethylmethacrylate (3FEMA), and glycidyl methacrylate (GMA), preferably said polymer overclad is provided from a batch reaction mixture of:

30-65 wt.% 3FEMA
20-65 wt.% 5FS
0-30 wt.% GMA, preferably
45-60 wt.% 3FEMA
30-45 wt.% SFS
5-15 wt.% GMA.

**54.** A method as claimed in claim 53 wherein said batch reaction mixture is polymerized in a solution of THF, preferably with an overall monomer concentration vs. THF 1-50 wt.%.

**55.** A method as claimed in claim 53 wherein said batch reaction mixture includes a free-radical initiator, preferably ADVN.

**56.** A method as claimed in claim 53 wherein said polymer overclad is provided in a solution, preferably said solution comprises a solvent selected from the solvent group consisting of a ketone family solvent, an ester family solvent, a tetrahydrofuran, a chloroform, a methylene chloride, a benzene and a mono or multi-substituted benzene such as toluene, xylene, chloro benzene.

**57.** A method as claimed in claim 56 wherein said solution further comprises ethyl acetate (AcOEt).

**58.** A method as claimed in claim 56 wherein said polymer overclad solution is applied to said core and substrate by dip-coating, by spin-coating, by spraying, or by dropping and evaporation.

**59.** A method as claimed in claim 53 wherein said polymer overclad has a Tg outside of the range of 0-70°C, preferably greater than 80°C.

# FIG.1

# FIG.2

# FIG.3

# FIG.4

# FIG.5A

5FS

# FIG.5B

3FEMA

# FIG.5C

GMA

# FIG.5D

GlyMo

# FIG.5E

MPMo

# FIG. 6A

# FIG. 6B

FIG.7A

FIG.7B

# FIG. 8

# FIG. 9

# FIG. 10

EP 1 026 526 A1

| European Patent Office | EUROPEAN SEARCH REPORT | Application Number |
|---|---|---|
| | | EP 99 40 0224 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | KOKOBUN Y ET AL: "TEMPERATURE-INDEPENDENT OPTICAL FILTER AT 1.55MUM WAVELENGTH USING A SILICA-BASED ATHERMAL WAVEGUIDE" ELECTRONICS LETTERS, vol. 34, no. 4, 19 February 1998, pages 367-369, XP000773780 * page 368, left-hand column, paragraph 4 - last paragraph * * page 368, right-hand column, last paragraph * | 22,24, 25,33,35 | G02B6/12 G02B6/34 |
| A | --- | 1,40 | |
| A | KOKUBUN Y ET AL: "ATHERMAL WAVEGUIDES FOR TEMPERATURE-INDEPENDENT LIGHTWAVE DEVICES" IEEE PHOTONICS TECHNOLOGY LETTERS, vol. 5, no. 11, 1 November 1993, pages 1297-1300, XP000416799 * abstract * * page 1299, left-hand column, paragraph 2 - page 1300, left-hand column, last paragraph * --- | 1,22,40 | |
| A | US 5 857 039 A (BOSC DOMINIQUE ET AL) 5 January 1999 * abstract; figure 3 * * column 2, line 56 - column 3, line 44 * --- | 1,11,13, 22,23 | TECHNICAL FIELDS SEARCHED (Int.Cl.6) G02B |
| A | BOSC D ET AL: "TEMPERATURE AND POLARISATION INSENSITIVE BRAGG GRATINGS REALISED ONSILICA WAVEGUIDE ON SILICON" ELECTRONICS LETTERS, vol. 33, no. 2, 16 January 1997, pages 134-136, XP000688652 * page 135, left-hand column, paragraph 2 - paragraph 3; figures 1,3 * * page 139, right-hand column, paragraph 3 - page 140, left-hand column, paragraph 2 * --- | 1,22,40 | |

-/--

The present search report has been drawn up for all claims

| Place of search | Date of completion of the search | Examiner |
|---|---|---|
| BERLIN | 25 June 1999 | Hylla, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 99 40 0224

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | INOUE Y ET AL: "ATHERMAL SILICA-BASED ARRAYED-WAVEGUIDE GRATING MULTIPLEXER" ELECTRONICS LETTERS, vol. 33, no. 23, 6 November 1997, pages 1945-1947, XP000773520 * the whole document * ----- | 1,22,40 | |
| | | | **TECHNICAL FIELDS SEARCHED** (Int.Cl.6) |

The present search report has been drawn up for all claims

| Place of search | Date of completion of the search | Examiner |
|---|---|---|
| BERLIN | 25 June 1999 | Hylla, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 99 40 0224

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-1999

| Patent document cited in search report | Publication date | Patent family member(s) | Publication date |
|---|---|---|---|
| US 5857039 A | 05-01-1999 | FR 2746511 A<br>EP 0797113 A | 26-09-1997<br>24-09-1997 |

For more details about this annex : see Official Journal of the European Patent Office, No. 12/82

EPO FORM P0459